# EUROPEAN PATENT APPLICATION

(11) **EP 1 370 090 A1**
(43) Date of publication of application: **10.12.2003**
(21) Application number: 02012240.4
(22) Date of filing: 03.06.2002
(51) Int. Cl.: H04N 9/64, H04N 5/46

(54) **Video format detector**

(71) Applicant: Sony International (Europe) GmbH, 10785 Berlin (DE)
(72) Inventor: Golov, Gil, Advanced Technology Center Stuttgart, 70327 Stuugart (DE)
(74) Representative: Müller - Hoffmann & Partner

(57) **Abstract**

A video format detector for distinguishing different video formats of an input digital video stream comprises a measurement stage (1, 2) for counting the number of pixels of a specified section of the input video stream, e.g. a video line length of the input video stream, and a classification stage (3) for determining the type of video format based on the number of the pixels counted by the measurement stage.

## Description

This invention relates to a video format detector. In particular it is concerned with the differentiation of different video formats of possibly different types of input digital video streams.

For analogue processing different techniques are known to distinguish different video formats, like PAL and NTSC, e.g. to measure the frequency of the colour subcarrier. However, for digital video there are no such techniques known.

Therefore, it is object of the present invention to provide a device facilitating the differentiation of different video formats supplied via a digital video stream. Further, it is object of the present invention to provide a device that makes said differentiation possible, if there are different types of input video streams. Moreover it is object of the present invention to provide a method for differentiation of different video formats of possibly different types of input digital video streams.

These objects are solved by a video format detector for distinguishing different video formats of an input digital video stream as defined in independent claim 1 and a method for distinguishing different video formats of an input digital video stream as defined in independent claim 12. Preferred embodiments thereof are respectively defined in the respective following dependent claims. A computer program product according to the present invention is defined in claim 23 and a computer storage means according to the present invention is defined in claim 24.

A video format detector for distinguishing different video formats of an input digital video stream according to the present invention comprises a measurement stage for counting the number of pixels of a specified section of the input video stream, and a classification stage for determining the type of video format based on the number of the pixels counted by the measurement stage. According to the present invention, this counted number of pixels might include pixels of active video area(s), and/or pixels of horizontal blanking area(s), and/or synchronisation signals embedded in the video stream. Further, according to the present invention, the number of pixels counted by the measurement stage might also be determined or counted by actually counting the number of clock pulses (or - equivalently - clock cycles) on which the input video stream is based during the specified section of the input video stream. Therewith, according to the present invention different video formats, like PAL and NTSC, embedded in a digital video stream can easily be distinguished.

Preferably, in a video format detector according to the present invention the specified section of the input video stream is a predetermined number of video line lengths. In particular, the counting of the pixels of one video line length is in most cases sufficient. A video line length might include an active video area and a horizontal blanking area. Depending on the input digital video stream also synchronisation signals embedded in the video stream might be included in the video line length.

Alternatively or additionally preferably, in a video format detector according to the present invention the classification stage comprises a first comparator for comparing the counted number of pixels to predefined values corresponding to different video formats. Therefore, an easy adaptation or upgrading of the video format detector according to the present invention to (further) different video formats is possible.

Further alternatively or additionally preferably, in a video format detector according to the present invention the measurement stage determines said specified section from the input video stream.

Still further alternatively or additionally preferably, in a video format detector according to the present invention the measurement stage comprises one module for analysing every group of different types of input video streams. Therewith, it is secured that the video format detector can easily be specifically adapted to all different types of input video streams which should be analyzed and an easy upgrading of the device to further types of input video streams is possible. Further, only one module is necessary for every group of different types of input video streams, i.e. respectively one module for all different types of input video streams which show the same characteristics in respect to the analyzation of the different video formats carried in the different types of input video streams.

Still further alternatively or additionally preferably, in a video format detector according to the present invention a module in the measurement stage comprises a counter that counts every clock pulse of the input video stream during the specified section and outputs it's count result, and a first register that takes as input signal the output signal of the counter and transmits the highest counted value of the previously counted specified section. This determination of the pixels in the specified section via the clock pulses on which the input video stream is based, i.e. the clock pulses of the bus supplying the input video stream (in the following also referred to as clock pulses of the input video stream), enables a simple construction applicable for different groups of input video streams and for different video formats.

In this case, a module in the measurement stage might additionally comprise a second to a fourth register, wherein an input of the second register is connected to the input video stream, an output of the second register is connected to an input of the third register, an output of the third register is connected to an input of the fourth register, the second to fourth register create a physical delay line to the input video stream; and a second to a fifth comparator respectively comparing one input signal to predefined values, wherein the second comparator whose input is connected to the input of the second register queries for start or for end of active video area codes, the fifth comparator whose input is connected to the output of the fourth register queries for the value FF, the third comparator whose input is connected to the output of the second register queries for the value O0, and the fourth comparator whose input is connected to the output of the third register queries for the value 00, the second to fifth comparator provide four input signals for an AND gate indicating if respectively start or end of the active video area has reached to determine the specified section based thereon, e.g. between two consecutive start of the active video area codes or between two consecutive end of the active video area codes.

Preferably, in this case said module in the measurement stage comprises a fifth register connected to the output of the AND gate, the fifth register synchronizing the output signal of the AND gate with the clock pulses of the input video stream.

Alternatively or additionally preferably, in this case a video format detector according to the present invention comprises a module in the measurement stage that provides a divider after the output of the counter to adapt the relation of pixels to clock pulses. This divider enables a simple adaptation of different ratios of clock pulses to number of pixels of different video streams. In particular, the divider might be arranged directly before or after the counter, or after the register providing the output value of a respective module.

Still further alternatively or additionally preferably, in a video format detector according to the present invention the specified section is defined between two consecutive rising edges or falling edges of the horizontal synchronization pulse Hsync in case of a 601 or comparable video stream. That means that the specified section is either defined between two consecutive rising edges of the horizontal synchronization pulse Hsync or that the specified section is defined between two consecutive falling edges of the horizontal synchronization pulse Hsync.

Still further alternatively or additionally preferably, in a video format detector according to the present invention the specified section is defined between two consecutive start of active video area codes or end of active video area codes in case of a 656 or comparable video stream. That means that specified section is either defined between two consecutive start of active video area codes or that specified section is defined between two consecutive end of active video area codes. Further, that means that one start of active video area code and one end of active video area code is included in the specified section.

A method for distinguishing different video formats of an input digital video stream according to the invention comprises the following steps: counting the number of pixels of a specified section of the input video stream and determining the type of video format based on the counted number of pixels. As mentioned above, according to the present invention, this counted number of pixels might include pixels of active video area(s), and/or pixels of horizontal blanking area(s), and/or synchronisation signals embedded in the video stream. Further, as also mentioned above, according to the present invention, the counted number of pixels might also be determined or counted by actually counting the number of clock pulses (or - equivalently - clock cycles) on which the input video stream is based during the specified section of the input video stream.

Preferably, in a method according to the present invention, the specified section of the input video stream is a predetermined number of video line lengths. As mentioned above, in particular, the counting of the pixels in one video line length is in most cases sufficient. As also mentioned above, a video line length might include an active video area and a horizontal blanking area, and depending on the input digital video stream also synchronisation signals embedded in the video stream might be included in the video line length.

Alternatively or additionally preferably, in a method according to the present invention, the counted number of pixels is compared to predefined values corresponding to different video formats.

Further alternatively or additionally preferably, in a method according to the present invention, said specified section is determined from the input video stream.

Still further alternatively or additionally preferably, in a method according to the present invention, every group of different types of input video streams is analysed separately.

Still further alternatively or additionally preferably, in a method according to the present invention, the number of pixels of a specified section of the input video stream is counted by counting every clock pulse of the input video stream during the specified section.

In this case, a last input sample of the input video stream is compared to a start or end of active video area code, to determine if start or end of the specified section has reached, as comparing result.

Preferably, in this case the comparing result is synchronised with the clock pulses of the input video stream.

Alternatively or additionally preferably, in this case the relation of pixels to the clock pulses is adapted.

Still further alternatively or additionally preferably, in a method according to the present invention, the specified section is defined between two consecutive rising edges or falling edges of the horizontal synchronization pulse Hsync in case of a 601 or comparable video stream.

Still further alternatively or additionally preferably, in a method according to the present invention, the specified section is defined between two consecutive start of active video area codes or end of active video area codes in case of a 656 or comparable video stream.

A computer program product according to the present invention comprises computer program means adapted to perform the method steps as set out above when being executed on a computer, digital signal processor, or the like.

A computer storage means according to the present stores a computer program product as defined above.

The present invention will become apparent and it's numerous modifications and advantages will be better understood from the following detailed description of an exemplary embodiment of the invention taken in conjunction with the accompanying drawings, wherein
- **Fig. 1**: shows a first module of the measurement stage according to the present invention,
- **Fig. 2**: shows a second module of the measurement stage according to the present invention,
- **Fig. 3**: shows a classification stage according to the present invention,
- **Fig. 4**: shows the general structure of a 601 video stream, and
- **Fig. 5**: shows the general structure of a 656 video stream.

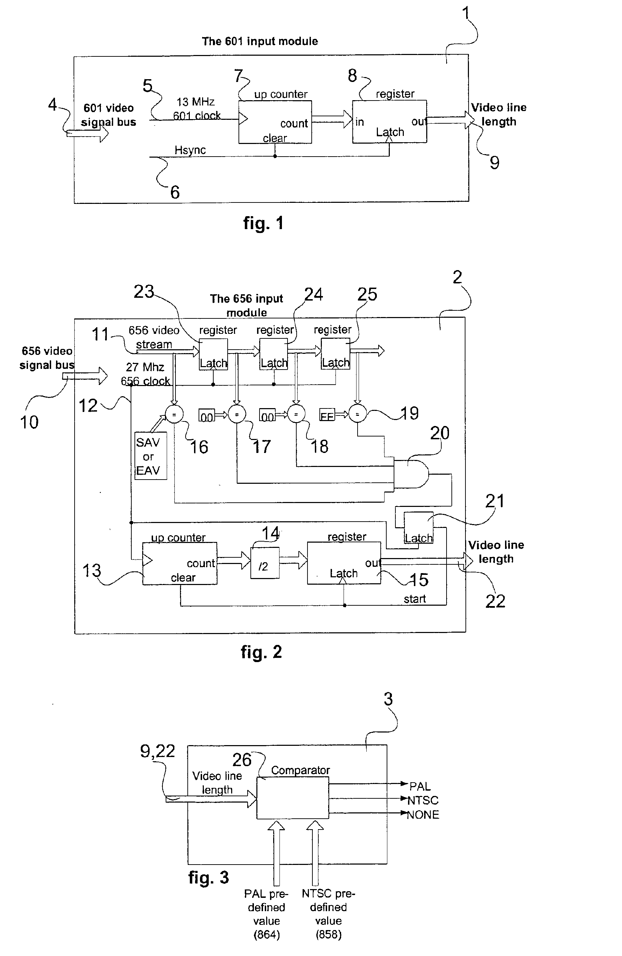

The following exemplary preferred embodiment of the invention comprises a first module 1 and a second module 2, respectively shown in Fig. 1 and Fig. 2, and a classification stage 3, shown in Fig. 3. The first and second modules 1, 2 build the measurement stage according to the present invention.

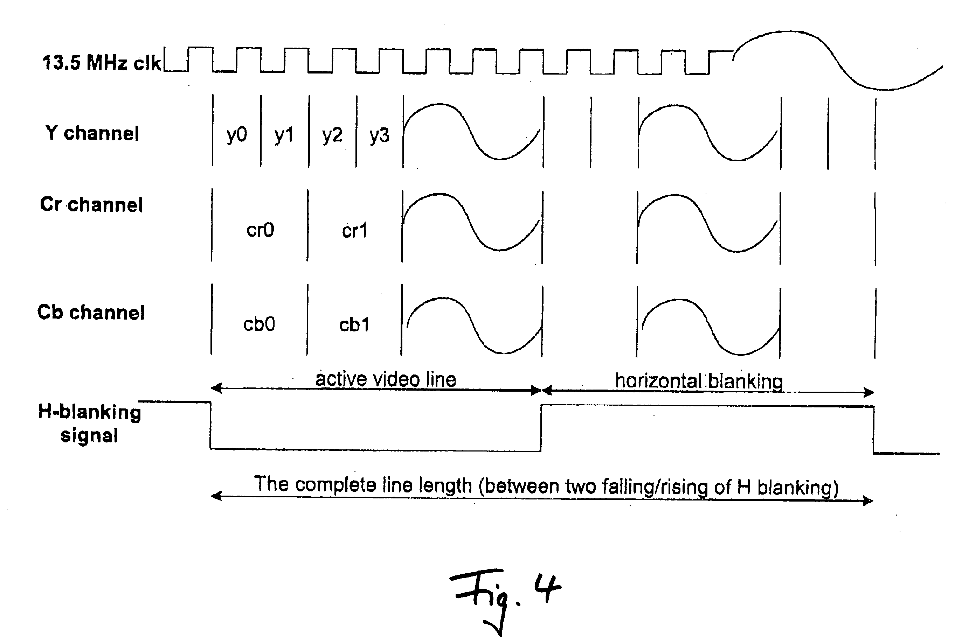

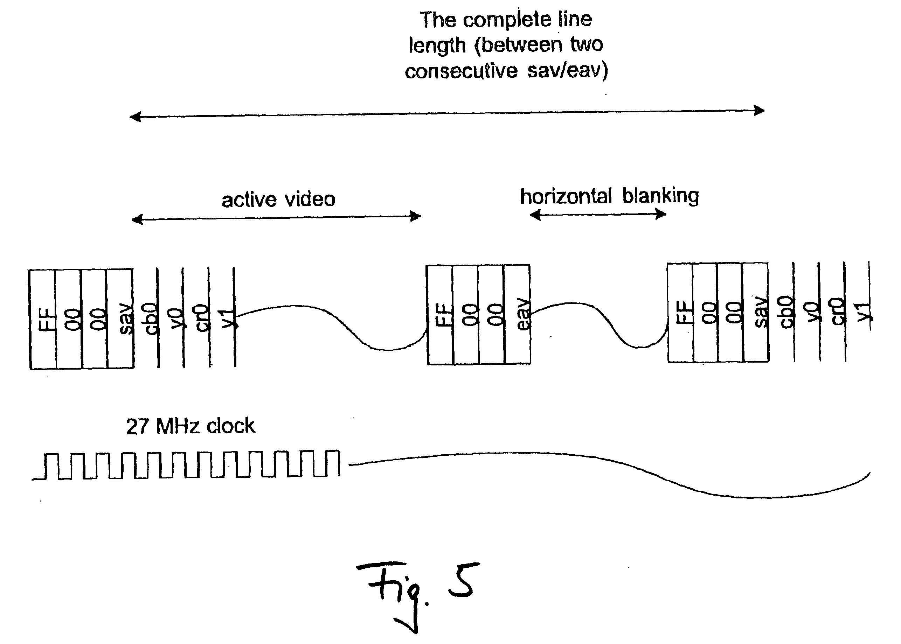

For elucidating the exemplary preferred embodiment of the invention Fig. 4 shows the general structure of a 601 video stream and Fig. 5 shows the general structure of a 656 video stream.

The 601 video stream (according to the BT.601 standard) shown in Fig. 4 is based on a 13.5 MHz clock and comprises a Y channel carrying luminance samples y0, y1 y2, y3, ... each having a length of one clock period of the 13.5 MHz clock, a Cr channel carrying colour difference samples cr0, cr1, ... each having a length of two clock periods of the 13.5 MHz clock, and a Cb channel carrying colour difference samples cb0, cb1 ... each having a length of two clock periods of the 13.5 MHz clock. Further, the 601 video stream comprises a H-blanking signal carrying the horizontal synchronization pulse Hsync indicating the active video line or active video area by a low amplitude and the horizontal blanking area by a high amplitude. The active video area and the horizontal blanking area are building the video line length which is therefore defined between two consecutive rising edges of the horizontal synchronization pulse Hsync or between two consecutive falling edges of the horizontal synchronization pulse Hsync.

The 656 video stream (according to the BT.656 standard) shown in Fig. 5 is based on a 27 MHz clock and comprises one channel carrying in an interleaved manner luminance samples y0, y1 ... each having a length of one clock period of the 27 MHz clock, colour difference samples cr0, ... each having a length of one clock period of the 27 MHz clock, and colour difference samples cb0, ... each having a length of one clock period of the 27 MHz clock. Further, the 656 video stream carries video timing reference codes SAV (Start of Active Video) and EAV (End of Active Video), each having a length of one clock period of the 27 MHz clock, which appear at the start and end of an active video area. EAV simultaneously defines the beginning of the horizontal blanking area and SAV simultaneously defines the end of the horizontal blanking area. To be able to properly detect SAV and EAV, these codes are respectively preceded by the samples FF, 00, 00, each having a length of one clock period of the 27 MHz clock. The active video area and the horizontal blanking area including one SAV and one EAV code are building the video line length which is therefore defined between two consecutive SAV codes or between two consecutive EAV codes (including one of the consecutive SAV or EAV codes and the other one of EAV code and SAV code being arranged between the two consecutive SAV codes or between two consecutive EAV codes).

In general, in the measurement stage according to the present invention the number of pixels of a specified section, e.g. a video line length, of the input video stream is measured by respective a measurement module 1, 2 adapted to a predetermined video stream type (or group of video stream types all showing the same characteristics in respect to the determination of the specified section), and in the classification stage 3 the measured value, e.g. the measured line length value, is compared against pre-defined constants, e.g. in case of measuring the video line length the constant 864 is used for PAL and the constant 858 is used for NTSC, and it is determined that either there is PAL or NTSC (or none of both) embedded in the video stream.

Each measurement module 1, 2 counts the number of pixels of a specified section of a predetermined input video stream. The specified section in this preferred embodiment corresponds to one video line length. Different modules 1, 2 are arranged for different groups of type of input video streams wherein a type of input video stream corresponds to a specific defined input video stream, e.g. a 601 video stream or a 656 video stream, and a group of types of input video streams respectively comprises such specific input video streams having the same characteristics to determine the video format from the video stream.

The classification stage 3 receives the counting results from the first module 1 and/or the second module 2, i.e. a line length value based on the number of pixels of a video line length, and compares the counted number of pixels with predefined values to determine the type of video format of the respective input video stream.

In the first module 1 shown Fig. 1 one type of video input stream, here a 601 video stream transmitted on a 601 video signal bus 4, is analyzed. The first module 1 of the measurement stage is connected to the 601 video signal bus 4 and receives therefrom its clock pulses 5 and the horizontal synchronization pulse Hsync 6 of the input 601 video stream. The 601 video signal bus clock pulses 5 are connected to a counting input of a counter 7 of the first module 1 which also receives the horizontal synchronization pulse Hsync at a clear input and whose output is connected to an input of a first register 8 of the first module 1 which is latched by the horizontal synchronization pulse Hsync. The output of the first register 8 of the first module 1 builds the output 9 of the first module 1.

Therewith, since the clear input of the counter 7 of the first module 1 and the latch input of the first register 8 of the first module 1 are sensitive on the same edge of the horizontal synchronization pulse Hsync, which is either the rising or the falling edge, the output 9 of the first module 1 provides the number of pixels in one video line length, i.e. between two consecutive rising edges or between two consecutive falling edges of the horizontal synchronization pulse Hsync. In this case the number of pixels of one video line length, i.e. of an active video area and of a horizontal blanking area, are counted by actually counting the clock periods of the clock signal on which the 601 video stream is based during one video line length.

The first module 1 counts the number of pixels, in this case a value proportional to the video line length, only from bus signals and therefore in an indirect way, i.e. without actually observing the video stream or video signal itself.

In the second module 2 shown in Fig. 2 a second type of video input stream, here a 656 video stream transmitted on a 656 video signal bus 10, is analyzed. The second module 2 is connected to the 656 video signal bus 10 and receives therefrom the 656 video stream 11 and it's clock pulses 12. The clock pulses 12 of the 656 video signal bus 10 are connected to a counting input of a counter 13 of the second module 2, whose output is connected to an input of a divider 14 dividing by 2. The output of the divider 14 is connected to an input of a first register 15 of the second module 2. The output of the first register 15 of the second module 2 is the output 22 of the second module 2.

The 656 video stream 11 is input to a second to a fourth register 23-25, which create a physical delay line. The second register 23 receives the 656 video stream at its input and the second to fourth registers 23-25 are connected in series so that an output of the second register 23 is connected to an input of the third register 24 and an output of the third register 24 is connected to an input of the fourth register 25.

Through this physical delay line the input video stream 11 is connected to a second to a fifth comparator 16-19, each of these four comparators querying for a respective predetermined value to determine the specific section from synchronization signals embedded in the video stream, in this case start or end of active video area codes. The comparators are connected so that the input of the second comparator 16 is connected to the input of the second register 23, the input of the fifth comparator 19 is connected to the output of the fourth register 25, the input of the third comparator 17 is connected to the output of the second register 23, and the input of the fourth comparator 18 is connected to the output of the third register 24. The second comparator 16 which therewith observes the actual sample n queries either for SAV or EAV, i.e. according to the embodiment it is queried only for SAV or only for EAV, the third comparator 17 which therewith observes the sample n-1 queries for 00, the fourth comparator 18 which therewith observes the sample n-2 queries for 00, and the fifth comparator 19 which therewith observes the sample n-3 queries for FF. The output signals of the second to fifth comparators 16-19 which are respectively logical high in case the respective input value is equal to the respective predetermined value are provided as four input signals to an AND gate 20. When all four conditions are met, i.e. depending on the embodiment the values FF 00 00 SAV or the values FF 00 00 EAV are input to the second module 2, the output of the AND gate 20 will be set to logical high '1' indicating that depending on the embodiment either SAV or EAV has reached.

The output of the AND gate 20 is connected to an input of a fifth register 21 that synchronises the output signal of the AND gate 20 with the clock pulses 12 supplied from the 656 video signal bus 10. For this purpose the latch input of the fifth register 21 is connected to the said clock pulses 12. The output of the fifth register 21 is connected to the clear input of the counter 13 of the second module 2 and the latch input of the first register 15 of the second module 2.

The fifth register 21 improves the synchronisation of the system, but is not obligatory for some implementations. Also, the divider 14 which adapts the ratio of number of clock pulses to number of pixels is not obligatory for the functionality of the video format detector, but if the system is designed without divider, the classification stage 3 needs other pre-defined values for comparing the counting result of the second module to determine the video format.

Therewith, since the clear input of the counter 13 of the second module 2 and the latch input of the first register 15 of the second module 2 are sensitive to the same control signal indicating either always start of an active video area or always end of an active video area, the output 22 of the second module 2 provides the number of pixels in one video line length, i.e. between two consecutive start of active video area codes or between two consecutive end of active video area codes. In this case the number of pixels of one video line length, i.e. of an active video area, the FF, 00, 00, EAV symbols, the number of pixels of a horizontal blanking area, and the FF, 00, 00, SAV symbols, are counted by actually counting the clock periods of the clock signal on which the 656 video stream is based during one video line length and dividing the result by 2.

In contrast to the first module 1, the second module 2 counts the number of pixels, in this case a value proportional to the video line length, on basis of synchronization signals embedded in the video stream and therefore in a direct way, i.e. by actually observing the video stream 11 or video signal itself.

Fig. 3 shows the classification stage 3 of the video format detector according to the present invention. The classification stage 3 receives the respective counted number of pixels of the video line length from the output 9 of the first module 1 and/or from the output 22 of the second module 2. This input signal is supplied to a first comparator 26 that compares the counted number of pixels of the video line length to predefined values, like 864 pixels for PAL with a clock pulse of 13.5 MHz in the 625 line system (50 Hz), or 858 pixels for NTSC with a clock pulse of 27 MHz in the 525 line system (59,94 Hz). The comparison can also be done by using a look-up table.

The query of the first comparator 26 can also be for the closest value to the predefined values. The result of the comparison, like PAL or NTSC or in case a (totally) different value is counted also NONE, is given as an output of the first comparator 26 and also of the classification stage 3 according to the present invention.

## Claims

1. Video format detector for distinguishing different video formats of an input digital video stream (11);
**characterized by** a measurement stage (1, 2) for counting the number of pixels of a specified section of the input video stream (11), and
a classification stage (3) for determining the type of video format based on the number of the pixels counted by the measurement stage (1, 2).

2. Video format detector according to claim 1, **characterized in that** the specified section of the input video stream (11) is a predetermined number of video line lengths.

3. Video format detector according to anyone of the preceding claims, **characterized in that** the classification stage (3) comprises a first comparator (26) for comparing the counted number of pixels to predefined values corresponding to different video formats.

4. Video format detector according to anyone of the preceding claims **characterized in that** the measurement stage (2) determines said specified section from the input video stream (11).

5. Video format detector according to anyone of the preceding claims **characterized in that** the measurement stage (1, 2) comprises one module (1; 2) for analysing every group of different types of input video streams (11).

6. Video format detector according to anyone of the preceding claims **characterized in that** a module (1; 2) in the measurement stage (1, 2) comprises
a counter (7; 13) that counts every clock pulse (5; 12) of the input video stream during the specified section and outputs it's count result, and
a first register (8; 15) that takes as input signal the output signal of the counter (7; 13) and transmits the highest counted value of the previously counted specified section.

7. Video format detector according to claim 6 **characterized in that** a module (2) in the measurement stage (1, 2) comprises
a second to a fourth register (23-25), wherein
an input of the second register (23) is connected to the input video stream (11), an output of the second register (23) is connected to an input of the third register (24), an output of the third register (24) is connected to an input of the fourth register (25),
the second to fourth register (23-25) create a physical delay line to the input video stream (11); and
a second to a fifth comparator (16-19) respectively comparing one input signal to predefined values, wherein
the second comparator (16) whose input is connected to the input of the second register (23) queries for start or for end of active video area codes,
the fifth comparator (19) whose input is connected to the output of the fourth register (25) queries for the value FF,
the third comparator (17) whose input is connected to the output of the second register (23) queries for the value 00 and
the fourth comparator (18) whose input is connected to the output of the third register queries for the value 00,
the second to fifth comparator (16-19) provide four input signals to an AND gate (20) indicating if respectively start or end of the active video area has reached to determine the specified section based thereon.

8. Video format detector according to claim 7 **characterized in that** said module (2) in the measurement stage (1, 2) comprises a fifth register (21) connected to the output of the AND gate (20), the fifth register (21) synchronizing the output signal of the AND gate (20) with the clock pulses (12) of the input video stream (11).

9. Video format detector according to anyone of the claims 6 to 8 **characterized in that** a module (2) in the measurement stage (1, 2) provides a divider (14) after the output of the counter (13) to adapt the relation of pixels to clock pulses.

10. Video format detector according to anyone of the preceding claims **characterized in that** the specified section is defined between two consecutive rising edges or falling edges of the horizontal synchronization pulse (Hsync) in case of a 601 or comparable video stream.

11. Video format detector according to anyone of the preceding claims **characterized in that** the specified section is defined between two consecutive start of active video area codes or between two consecutive end of active video area codes in case of a 656 or comparable video stream.

12. Method for distinguishing different video formats of an input digital video stream **characterized by** the following steps:
counting the number of pixels of a specified section of the input video stream, and
determining the type of video format based on the counted number of pixels.

13. Method according to claim 12 **characterized in that** the specified section of the input video stream is a predetermined number of video line lengths.

14. Method according to anyone of the preceding claims 12 or 13 **characterized by** comparing the counted number of pixels to predefined values corresponding to different video formats.

15. Method according to anyone of the preceding claims 12 to 14 **characterized by** determining said specified section from the input video stream (11).

16. Method according to anyone of the preceding claims 12 to 15 **characterized by** analysing every group of different types of input video stream separately.

17. Method according to anyone of the preceding claims 12 to 16 **characterized in that** the number of pixels of a specified section of the input video stream is counted by counting every clock pulse of the input video stream during the specified section.

18. Method according to claim 17 **characterized by** comparing a last one input sample of the input video stream to a start or end of active video area code, to determine if start or end of the specified section has reached, as comparing result.

19. Method according to claim 18 **characterized by** synchronizing the comparing result with the clock pulses of the input video stream.

20. Method according to anyone of the claims 17 to 19 **characterized by** adapting the relation of pixels to clock pulses.

21. Method according ,to anyone of the preceding claims 12 to 20 **characterized in that** the specified section is defined between two consecutive rising edges or falling edges of the horizontal synchronization pulse (Hsync) in case of a 601 or comparable video stream.

22. Method according to anyone of the preceding claims 12 to 21 **characterized in that** the specified section is defined between two consecutive start of active video area codes or end of active video area codes in case of a 656 or comparable video stream.

23. Computer program product, comprising computer program means adapted to perform the method steps as defined in anyone of claims 12 to 22 when being executed on a computer, digital signal processor, or the like.

24. Computer storage means, storing thereon a computer program product according to claim 23.
